# EUROPÄISCHE PATENTSCHRIFT

(11) **EP 0 512 081 B1**
(45) Veröffentlichungstag und Bekanntmachung des Hinweises auf die Patenterteilung: **26.04.1995**
(21) Anmeldenummer: 91918583.5
(22) Anmeldetag: 05.11.1991
(51) Int. Cl.: H02J 7/14, H02J 7/10, G01R 31/36

(54) **SPANNUNGSREGLER FÜR EINEN GENERATOR**
VOLTAGE-CONTROL UNIT FOR A GENERATOR
REGULATEUR DE TENSION POUR UNE GENERATRICE

(30) Priorität: 27.11.1990 DE 4037640
(43) Veröffentlichungstag der Anmeldung: 11.11.1992
(73) Patentinhaber: ROBERT BOSCH GMBH, 70442 Stuttgart (DE)
(72) Erfinder: KOHL, Walter, D-7120 Bietigheim (DE); MEYER, Friedhelm, D-7132 Illingen (DE); MITTAG, Rainer, D-7014 Kornwestheim (DE)
(86) Internationale Anmeldenummer: DE9100857
(87) Internationale Veröffentlichungsnummer: WO9210019

(56) Entgegenhaltungen:
- EP-A- 0 166 162
- WO-A-90/13823
- DE-A- 3 712 629
- US-A- 4 342 963

## Beschreibung

### Stand der Technik

Die Erfindung geht aus von einem Spannungsregler für einen Generator nach der Gattung des Hauptanspruchs. Die Ausgangsspannung eines Generators im Kraftfahrzeug, die zur Ladung einer Batterie und zur Versorgung der Verbraucher im Fahrzeug verwendet wird, wird mit Hilfe eines Spannungsreglers auf einen konstanten Wert geregelt. Da für eine optimale Ladung der Batterie bei tiefen Temperaturen eine höhere Ladespannung erforderlich ist als bei hohen Temperaturen, wird die Ladespannung und damit auch die Generatorausgangsspannung an die Temperatur der Batterie angepaßt. Dazu ist es beispielsweise aus der DE-OS 32 43 075 bekannt, die Temperatur der Batterie mit einem Temperatursensor, der in unmittelbarer Nähe der Batterie befestigt ist, zu messen, und anhand des Ausgangssignals dieses Temperatursensors die Ladespannung zu beeinflussen.

Als Nachteil hat sich bei einem derartigen Spannungsregler erwiesen, daß ein separater Temperatursensor benötigt wird, der zudem mit einer relativ langen Leitung vom Ort der Batterie bis zum Regler verbunden werden muß. Dies verursacht einerseits Kosten und kann andererseits Störungen verursachen.

Da auf der Ladeleitung zwischen dem Generator und der Batterie ein Spannungsabfall auftritt, der für eine optimale Batterieladung ebenfalls berücksichtigt werden sollte, ist aus der DE-OS 32 43 075 bekannt, auch die Spannung am Batteriepluspol zu messen. Dazu wird jedoch ein weiterer Sensor mit dazugehöriger Verbindungsleitung benötigt.

### Vorteile der Erfindung

Der erfindungsgemäße Spannungsregler nach der Gattung des Hauptanspruchs hat demgegenüber den Vorteil, daß kein zusätzlicher Temperatursensor und kein zusätzlicher Spannungsmesser benötigt wird, da die Temperatur der Batterie aus in geeigneten Kennfeldern im Regler abgespeicherten Daten im Regler selbst ermittelt wird. Der Spannungsabfall auf der Ladeleitung wird ebenfalls durch in geeigneten Kennfeldern abgespeicherten Daten ermittelt und bei der Festlegung der Generatorausgangsspannung berücksichtigt.

Durch die in den Unteransprüchen angegebenen Maßnahmen sind vorteilhafte Weiterbildungen und Verbesserungen des in Anspruch 1 beanspruchten Spannungsreglers möglich.

### Zeichnung

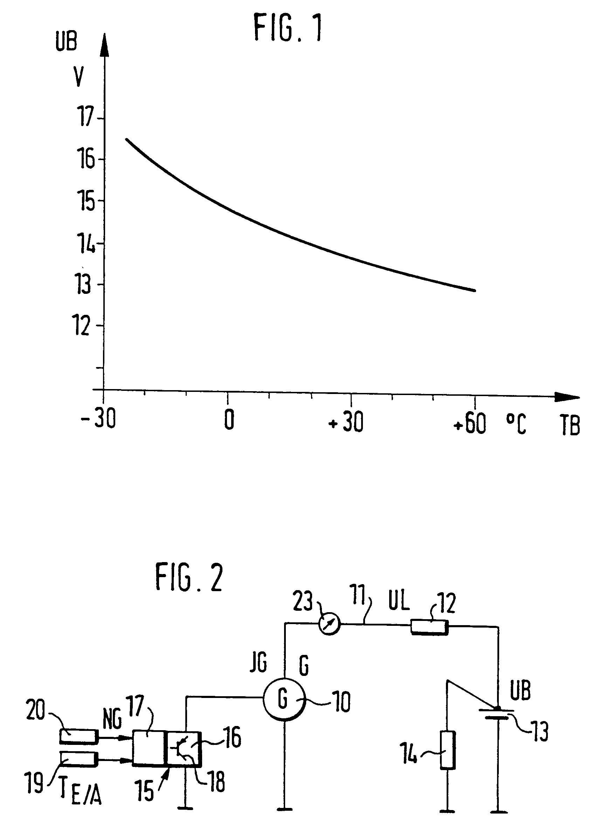

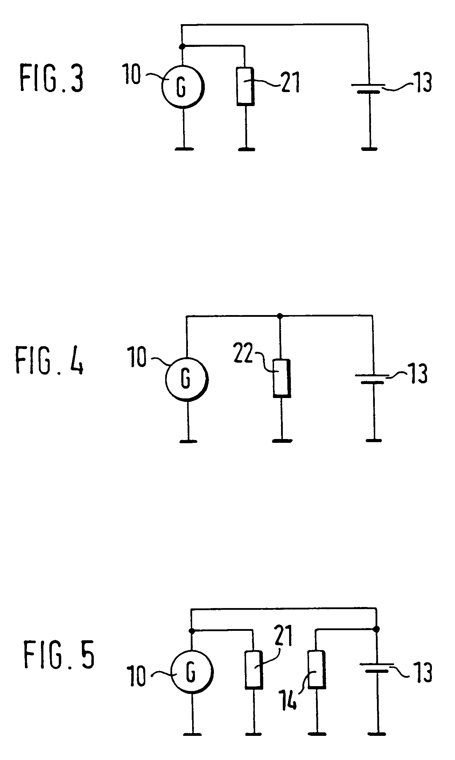

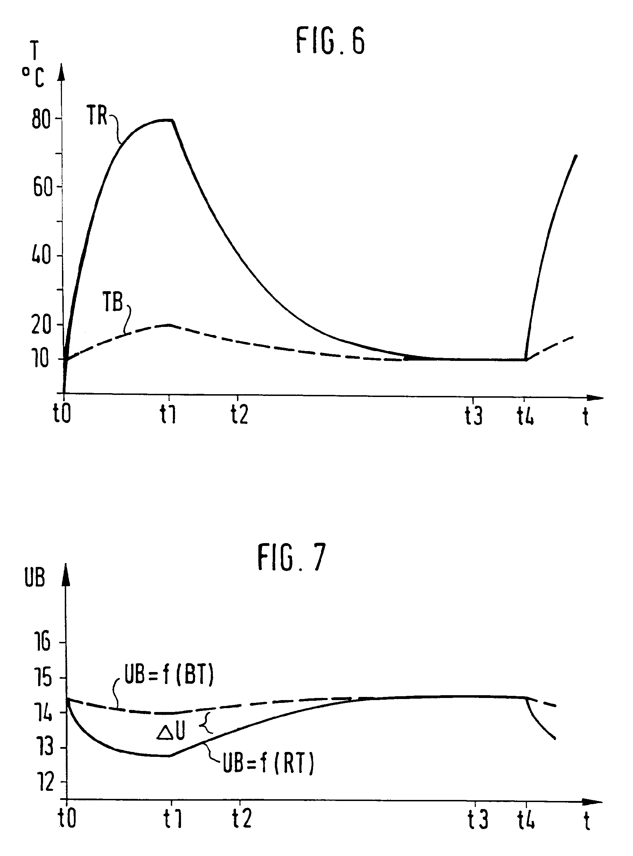

In Figur 1 ist der bekannte Zusammenhang zwischen Batteriespannung und Temperatur der Batterie aufgetragen, in Figur 2 ist ein Prinzipschaltbild angegeben, die Figuren 3, 4 und 5 zeigen vereinfachte Darstellungen der Änschlußmöglichkeiten von Verbrauchern an die Batterie bzw. den Generator, in Figur 6 ist der Verlauf der Temperatur des Spannungsreglers sowie der Batterie über der Zeit aufgetragen und in Figur 7 ist der Verlauf der Batteriespannung über der Zeit entsprechend dem erfindungsgemäßen Spannungsregler aufgetragen.

### Beschreibung des Ausführungsbeispieles

Der in Figur 1 dargestellte Verlauf der Batteriespannung UB über der Temperatur der Batterie TB entspricht dem angestrebten Verlauf, der eine optimale Ladung der Batterie gewährleistet. Damit ein solcher Verlauf realisierbar ist, müssen einige Bedingungen erfüllt sein, die anhand des in Figur 2 dargestellten Prinzipschaltbildes erläutert werden.

Mit 10 ist ein von einem nicht dargestellten Motor eines Kraftfahrzeugs angetriebener Generator bezeichnet, der über eine Ladeleitung 11, deren Widerstand durch den Widerstand 12 angedeutet ist, mit dem Pluspol der Batterie 13 verbunden ist. Am Pluspol der Batterie 13 angeschlossen sind die Verbraucher, die in Figur 2 durch einen Widerstand 14 symbolisiert sind.

Weiterhin ist der Generator 10 mit einem Spannungsregler 15 verbunden, der sich aus einem Leistungsteil 16 und einem Steuerteil 17 zusammensetzt. Im Leistungsteil 16 befindet sich der Schalttransistor 18, dessen Tastverhältnis T_{E/A}, daß das Verhältnis von eingeschalteter zu ausgeschalteter Zeit des Schalttransistors angibt, mittels eines Sensors 19 erfaßt wird und dem Steuerteil 17 des Spannungsreglers 15 zugeführt wird. Außerdem wird mit einem weiteren Sensor 20 die Drehzahl NG des Generators erfaßt und ebenfalls dem Steuerteil 17 zugeführt. Die Drehzahl NG kann auch über eine Auswertung der Frequenz der induzierten Generatorspannung einer der Phasen u, v, w ermittelt werden.

Im Steuerteil 17, das vorzugsweise einen »C enthält, laufen die erforderlichen Berechnungen und Zeitmessungen ab, außerdem sind die für die Berechnungen erforderlichen Daten dort abgespeichert. Weiterhin übernimmt das Steuerteil 17 in bekannter Weise die Ansteuerung des Schalttransistors 18 und damit die Einstellung der Generatorausgangsspannung über eine entsprechende Regelung des Erregerstromes.

Bei dem in Figur 2 dargestellten Beispiel ist die Ausgangsspannung des Generators gleich UG, die Batteriespannung UB am Pluspol der Batterie 13 ist gleich der Generatorspannung UG, vermindert um den im Widerstand 12 der Ladeleitung 11 abfallenden Spannungswert UL. Der vom Generator 10 gelieferte Generatorstrom IG kann aus der gemessenen Generatordrehzahl NG und dem ebenfalls gemessenen Tastverhältnis T_{E/A} des Schalttransistors 18, der maßgeblich ist für den Erregerstrom ermittelt werden.

Der in Figur 2 dargestellte Anschluß der Verbraucher, die durch den Widerstand 14 symbolisiert werden, ist eine Idealisierung, die im realen Bordnetz so nicht möglich ist. Im realen Bordnetz existieren auch Verbraucher, die entsprechend den Darstellungen in Figur 3 und 4 als direkt am Generator oder zwischen Generator und Batterie angeschlossene Widerstände, deren anderer Anschluß jeweils auf Masse liegt, dargestellt sind. Auch eine Kombination der Anschlußstellen, entsprechend Figur 5 ist nicht auszuschließen.

Damit an der Batterie eine ideale Ladespannung UB anliegt, muß der Spannungsabfall zwischen dem Generatorausgang und dem Pluspol der Batterie 13 kompensiert werden, d.h. der Sollwert der Generatorausgangsspannung UG am Generatorausgang muß um genau den Spannungsabfall UL erhöht werden.

Dazu wird der Spannungsabfall UL im Steuerteil 17 des Spannungsreglers 15 aus dem Generatorstrom IG und dem Wert des Widerstandes 12 berechnet.

Für den idealisierten Fall nach Figur 2 kann diese Berechnung auf einfache Weise nach dem ohmschen Gesetz erfolgen, da der Spannungsabfall UL in der Ladeleitung 11 gleich dem Produkt aus dem Wert des Widerstandes 12 und durchfließendem Strom IG ist.

Die Werte des Generatorstroms IG werden in einem Kennfeld in Abhängigkeit von der Generatordrehzahl NG und dem Tastverhältnis T_{E/A} in einem Speicher im Steuerteil 17 des Spannungsreglers 15 abgelegt, ebenso wird der Wert des Widerstandes 12 der Ladeleitung 11 einmal gemessen und abgespeichert. Die so abgespeicherten Werte werden für die Berechnung des Spannungsabfalls UL verwendet.

Falls der Ausgangsstrom des Generators IG mit einem Stromsensor 23 direkt gemessen wird, kann zur Berechnung des Spannungsabfalls UL selbstverständlich dieser gemessene Wert herangezogen werden.

Im realen Bordnetz sind diese Berechnungen des Spannungsabfalls UL mit Korrekturen zu versehen, die über entsprechend abgelegte Korrekturfaktoren erhalten werden. Diese Korrekturfaktoren werden vor Auslieferung des Reglers ermittelt und in einem Speicher des Steuerteils 17 abgelegt.

Allgemein wird der Spannungsabfall UL an der Ladeleitung 11 damit mit Hilfe einer Simulation aus abgespeicherten Daten ermittelt, gegebenenfalls unter Zuhilfenahme von leicht meßbaren Gröβen oder Größen, die sowieso gemessen werden müssen.

Bei der Simulation der Batterietemperatur im Steuerteil 17 des Spannungsreglers 15 wird davon ausgegangen, daß sich nach Fahrbeginn der Spannungsregler 15 und die Batterie 13 auf eine vorbestimmbare Art erwärmen.

In Figur 6 ist ein gemessener Temperaturverlauf am Regler und an der Batterie über der Zeit t aufgetragen, wobei zu einer Zeit to bei einer Temperatur von 10° C der Motor eingeschaltet wird.

Die Temperatur TR des Reglers steigt während des Laufens des Motors stark an und würde nach einiger Zeit sich etwa auf einen Grenzwert einpendeln. Die Temperatur TB der Batterie steigt ebenfalls an, sie würde nach einiger Zeit ebenfalls zumindest näherungsweise konstant werden.

Im Beispiel nach Figur 6 wird jedoch nach einer Zeit t1 der Motor ausgeschaltet, dadurch sinkt sowohl die Temperatur TR des Reglers als auch die Temperatur TB der Batterie ab. Zum Zeitpunkt t2 ist jedoch die Temperatur des Reglers noch nicht auf die Temperatur der Batterie abgefallen, dies ist erst nach einer Zeit t3 der Fall.

Wird der Motor nach einer weiteren Zeit t4 wieder eingeschaltet, dann wiederholen sich die Vorgänge entsprechend des Zeitintervalls zwischen to und t1.

In Figur 7 ist der Verlauf der Batteriespannung UB über der Zeit t für das aus Figur 6 bekannte Beispiel aufgetragen. Dabei zeigt die untere Kurve den Spannungsverlauf als Funktion der Reglertemperatur, d.h. dieser Spannungsverlauf würde eingestellt, bei einer temperaturabhängigen Regelung mit Temperaturmessung am Regler selbst.

Die obere Kurve zeigt den Verlauf der Batteriespannung UB über der Zeit t als Funktion der Batterietemperatur TB. In beiden Fällen würde die Spannung mit zunehmender Erwärmung abgesenkt, jedoch bei Messung der Temperatur am Regler viel stärker als bei Messung der Temperatur der Batterie. Dies führt dazu, daß bei einer Regelung entsprechend der Reglertemperatur zu niedrige Spannungswerte eingestellt werden, es wird daher erfindungsgemäß zwar nicht die Batterietemperatur gemessen, diese jedoch durch Simulation aus abgelegten Daten, ermittelt.

Daß sich bei Verwendung der Reglertemperatur TR für die Einstellung des Sollwerts der Generatorspannung UG Fehler ergeben würden, zeigt auch folgende Überlegung: Bei einem erneuten Start zum Zeitpunkt t2, also im "halbwarmen" Betriebszustand wäre eine Abweichung u vorhanden, die eine zu niedrige Ladespannung verursachen würde. Verursacht wird diese Abweichung durch die insgesamt höhere Reglertemperatur die in der Zeitspanne zwischen t1 und t2 noch nicht auf den Wert der Batterietemperatur gefallen ist.

Um die genannten Schwierigkeiten zu umgehen, wird erfindungsgemäß während des Betriebes, also während des Zeitintervalls to bis t1 der Sollwert der Generatorspannung UG nicht entsprechend der Reglertemperatur vorgegeben, sondern entsprechend einer aus einem abgespeicherten Kennfeld berechneten Temperatur, die einer simulierten Batterietemperatur entspricht, wobei das Kennfeld die Erwärmungszeitkonstante der Batterie 13 enthält. Diese Erwärmungszeitkonstante wird vor Auslieferung des Fahrzeuges bestimmt und in einem Speicher des Steuerteils 17 des Spannungsreglers 15 abgelegt.

Zu Beginn der Simulation wird als Starttemperatur die Temperatur des Reglers benutzt, die zur Zeit to der Temperatur der Batterie entspricht. Die bei jeder Simulation bzw. Berechnung ermittelte Batterietemperatur wird abgespeichert und zur nächsten Berechnung als Starttemperatur verwendet, bei weiter laufendem Motor werden so laufend neue Batterietemperaturen bestimmt. Wird nach der Zeit t4 erneut gestartet, sind sowohl der Regler als auch die Batterie wieder auf dieselbe Temperatur abgekühlt und die Simulation der Batterietemperatur erfolgt gleich wie im Zeitintervall zwischen to und t1.

Wird jedoch nach einer Zeit t2 erneut gestartet, liegt ein "halbwarmer" Betriebszustand vor, die Batterietemperatur und die Reglertemperatur weichen dann um einen Wert T voneinander ab. In diesem Fall wird als Startwert für die Temperatursimulation nicht die Reglertemperatur verwendet, sondern es wird, ausgehend vom letzten berechneten Wert der Batterietemperatur zum Zeitpunkt t1 ein neuer Wert der Batterietemperatur zum Zeitpunkt t2 berechnet, wobei dies unter Berücksichtigung der Länge des Zeitintervalls zwischen t1 und t2 und einer Abkühlzeitkonstanten für die Batterie geschieht.

Die Abkühlzeitkonstante wird dabei ebenso wie die Erwärmungszeitkonstante der Batterie einmal ermittel bzw. gemessen und in einem Speicher des Steuerteils 17 abgelegt.

Eine Berücksichtigung von ebenfalls gemessenen und abgespeicherten Erwärmungs- bzw. Abkühlungszeitkonstanten des Reglers ermöglicht die Berechnung der Zeit t3, nach der der Regler wieder auf die Umgebungstemperatur abgekühlt ist, so daß seine Temperatur wieder als Starttemperatur für die Simulation der Batterietemperatur verwendet werden kann, sofern auch die simulierte Batterietemperatur nach dieser Zeit auf Umgebungstemperatur liegt.

Die Abkühlzeitkonstante wird dabei ebenso wie die Erwärmungszeitkonstante der Batterie einmal ermittelt bzw. gemessen und in einem Speicher des Steuerteils 17 abgelegt.

Eine Berücksichtigung von ebenfalls gemessenen und abgespeicherten Erwärmungs- bzw. Abkühlzeitkonstanten des Reglers ermöglicht die Berechnung der Zeit t3, nach der der Regler wieder auf die Umgebungstemperatur abgekühlt ist, so daß seine Temperatur wieder als Starttemperatur für die Simulation der Batterietemperatur verwendet werden kann, sofern auch die simulierte Batterietemperatur nach dieser Zeit auf Umgebungstemperatur liegt.

## Patentansprüche

1. Spannungsregler für einen Generator, der eine Batterie über eine Ladeleitung lädt, und ein Fahrzeug-Bordnetz mit Spannung versorgt, wobei die Höhe der Spannung in Abhängigkeit von der Temperatur der Batterie festgelegt wird, dadurch gekennzeichnet, daß die Temperatur (TB) der Batterie (13) und/oder der Spannungsabfall (UL) auf der Ladeleitung (11) durch Simulation aus abgespeicherten Daten ermittelt wird.

2. Spannungsregler nach Anspruch 1, dadurch gekennzeichnet, daß der Spannungsregler (15) ein Steuerteil (17) umfaßt, das eine Zeitmessung durchführt, in dem Daten abgespeichert sind und das Berechnungen durchführt zur Bestimmung der Temperatur (TB) der Batterie (13), aus den abgespeicherten Daten unter Berücksichtigung der ermittelten Zeiten (to-t4).

3. Spannungsregler nach Anspruch 1 oder 2, dadurch gekennzeichnet, daß die Temperatur (TR) des Spannungsreglers (15) erfaßt wird und diese Temperatur bei der Ermittlung der Temperatur der Batterie (13) mitberücksichtigt wird.

4. Spannungsregler nach einem der vorhergehenden Ansprüche, dadurch gekennzeichnet, daß die abgespeicherten Daten Kennfelder sind, die wenigstens die Erwärmungs- und/oder Abkühlungszeitkonstanten der Batterie (13) enthalten.

5. Spannungsregler nach Anspruch 4, dadurch gekennzeichnet, daß die abgespeicherten Daten auch die Erwärmungs- und/oder Abkühlungszeitkonstanten des Spannungsreglers (15) umfassen.

6. Spannungsregler nach Anspruch 1, dadurch gekennzeichnet, daß die Generatordrehzahl (NG) und das Tastverhältnis (T_{E/A}) des Schalttransistors (18) des Spannungsreglers (15) gemessen werden und daß aus den Meßwerten der Generatorstrom ermittelt wird und zusammen mit den abgespeicherten Werten für den Widerstand der Ladeleitung zur Simulation des Spannungsabfalls (UL) auf der Ladeleitung verwendet wird.

7. Spannungsregler nach Anspruch 6, dadurch gekennzeichnet, daß bei der Ermittlung des Spannungsabfalls (UL) zusätzliche Korrekturfaktoren berücksichtigt werden.

## Claims

1. Voltage-control unit for a generator which charges a battery via a charge line and supplies a vehicle electrical system with voltage, the level of voltage being determined as a function of the temperature of the battery, characterized in that the temperature (TB) of the battery (13) and/or the voltage drop (UL) on the charge line (11) is/are determined by simulation from stored data.

2. Voltage-control unit according to Claim 1, characterized in that the voltage-control unit (15) comprises a control component (17) which carries out a time measurement, in which data are stored and which carries out calculations for determining the temperature (TB) of the battery (13) from the stored data taking into account the determined times (to-t4).

3. Voltage-control unit according to Claim 1 or 2, characterized in that the temperature (TR) of the voltage-control unit (15) is detected and this temperature is also taken into account during the determination of the temperature of the battery (13).

4. Voltage-control unit according to one of the preceding claims, characterized in that the stored data are characteristic diagrams which contain at least the heating and/or cooling time constants of the battery (13).

5. Voltage-control unit according to Claim 4, characterized in that the stored data also comprise the heating and/or cooling time constants of the voltage-control unit (15).

6. Voltage-control unit according to Claim 1, characterized in that the rpm (NG) of the generator and the pulse-duty factor (T_{E/A}) of the switching transistor (18) of the voltage-control unit (15) are measured, and in that the generator current is determined from the measured values and is used together with the stored values for the resistance of the charge line to simulate the voltage drop (UL) on the charge line.

7. Voltage-control unit according to Claim 6, characterized in that additional correction factors are taken into account during the determination of the. voltage drop (UL).

## Revendications

1. Régulateur de tension pour une génératrice, qui charge une batterie au moyen d'une ligne de charge et alimente en tension le réseau de bord d'un véhicule, la valeur de la tension étant déterminée en fonction de la température de la batterie, régulateur caractérisé en ce que la température (TB) de la batterie (13) et/ou la chute de tension (UL) sur la ligne de charge (11) est déterminée par simulation à partir de données mises en mémoire.

2. Régulateur de tension selon la revendication 1, caractérisé en ce que le régulateur de tension (15) comprend une partie de commande (17), qui réalise une mesure du temps, dans laquelle des données sont mises en mémoire, et qui exécute des calculs pour déterminer la température (TB) de la batterie (13), à partir des données mises en mémoire en prenant en considération les temps détectés (tₒ-t₄).

3. Régulateur de tension selon la revendication 1 ou 2, caractérisé en ce qu'on détecte la température (TR) du régulateur de tension (15) et qu'on prend en même temps en considération cette température lors de la détermination de la température de la batterie (13).

4. Régulateur de tension selon l'une des revendications précédentes, caractérisé en ce que les données mises en mémoire sont des champs caractéristiques qui contiennent au moins les constantes de temps d'échauffement et/ou de refroidissement de la batterie (13).

5. Régulateur selon la revendication 4, caractérisé en ce que les données mises en mémoire comprennent aussi les constantes de temps d'échauffement et/ou de refroidissement du régulateur de tension (15).

6. Régulateur de tension selon la revendication 1, caractérisé en ce qu'on mesure la vitesse de rotation (NG) de la génératrice et le taux d'impulsions (T_{E/A}) du transistor de commutation (18) du régulateur de tension (15) et en ce qu'à partir des valeurs de mesure on détecte l'intensité de la génératrice et on l'utilise en même temps que les valeurs mises en mémoire pour la résistance de la ligne de charge servant à la simulation de la chute de tension (UL) sur la ligne de charge.

7. Régulateur de tension selon la revendication 6, caractérisé en ce que l'on prend en considération des facteurs de correction additionnels dans le cas de la détermination de la chute de tension (UL).
